(19) Europäisches Patentamt
European Patent Office
Office européen des brevets

(11) **EP 0 859 454 B1**

(12) **FASCICULE DE BREVET EUROPEEN**

(45) Date de publication et mention
de la délivrance du brevet:
**02.10.2002 Bulletin 2002/40**

(51) Int Cl.⁷: **H02M 3/00**, G05F 1/67,
H02M 3/157, G04G 1/00,
H02J 7/35

(21) Numéro de dépôt: **97102519.2**

(22) Date de dépôt: **17.02.1997**

(54) **Elévateur à découpage de la tension d'une source photovoltaique, notamment pour pièce d'horlogerie**

Schaltender Spannungserhöher von einer photovoltaischen Quellenspannung, insbesondere für eine Uhr

Switch mode booster of a photovoltaic source voltage, especially for a timepiece

(84) Etats contractants désignés:
**DE FR GB NL**

(43) Date de publication de la demande:
**19.08.1998 Bulletin 1998/34**

(73) Titulaire: **ASULAB S.A.**
**2074 Marin (CH)**

(72) Inventeurs:
• **Wattenhofer, Jean-Pierre**
**2000 Neuchâtel (CH)**
• **Farine, Pierre-André**
**2003 Neuchâtel (CH)**

(74) Mandataire: **Balsters, Robert et al**
**I C B,**
**Ingénieurs Conseils en Brevets S.A.,**
**7, rue des Sors**
**2074 Marin (CH)**

(56) Documents cités:
**DE-A- 2 900 622**        **US-A- 3 970 919**
**US-A- 4 291 266**        **US-A- 4 580 090**

• **ELEKTRONIK, vol. 39, no. 9, 27 Avril 1990, page 150/151 XP000116206 RITTENBRUCH F -A: "SOLAR-AKKULADER MIT NUR EINER SOLARZELLE"**

EP 0 859 454 B1

**Description**

La présente invention est relative à un élévateur de la tension électrique d'une source d'énergie fonctionnant par conversion photovoltaïque.

Plus précisément, l'invention concerne un élévateur de tension fonctionnant sur le principe du découpage périodique du courant qu'une source photovoltaïque délivre à sa charge.

Ce type d'élévateur de tension couplé à une source ou cellule photovoltaïque est approprié particulièrement pour assurer l'alimentation en énergie électrique de faibles consommateurs d'énergie comme les pièces d'horlogerie, notamment une montre ou un réveil, une calculatrice de poche, un poste de radio miniature, une télécommande par infrarouges ou par ondes radio, un téléphone sans fil, un récepteur GPS etc. Ces appareils faibles consommateurs sont à alimentation électrique autonome et comprennent en tant que charge de la cellule un accumulateur électrique maintenu en charge à partir de la source d'énergie photovoltaïque. L'énumération des applications possibles de l'invention qui vient d'être faite n'est évidemment nullement limitative.

Les sources ou cellules photovoltaïques actuellement utilisées pour assurer l'alimentation de ces petits consommateurs d'énergie, fournissent typiquement une tension d'environ 0,3 à 0,6 V par élément, qu'elles soient de type semi-conducteur ou photochimique. Par ailleurs, les circuits électroniques nécessitent une tension d'alimentation qui ne peut guère être inférieure à 1 V de sorte que l'on a l'habitude de brancher plusieurs de ces cellules en série pour en assurer l'alimentation.

Or, pour des raisons d'esthétique, d'encombrement, de prix etc., (critères qui sont particulièrement cruciaux dans la technologie horlogère), on cherche actuellement des solutions de construction dans lesquelles il suffit d'une seule cellule photovoltaïque pour assurer l'alimentation de l'appareil.

On voit donc qu'il y a en principe incompatibilité entre d'une part la faible tension fournie par une seule cellule photovoltaïque et d'autre part les besoins en tension électrique des circuits intégrés courants nécessaires pour faire fonctionner les appareils du genre visé ici.

Une solution permettant de remédier à cette incompatibilité, a déjà été proposée dans la demande de brevet allemand No DOS 29 00 622 dans laquelle on décrit un élévateur de tension à découpage capable de convertir la tension fournie par la cellule en une tension qui est appliquée à une charge, ici un accumulateur, qu'elle est destinée à charger.

A cet effet, la cellule est connectée à sa charge par l'intermédiaire d'une self et d'une diode de blocage en série, le noeud entre ces deux composants étant périodiquement mis à la masse à l'aide d'un transistor de commutation de telle sorte que la self puisse alternativement accumuler de l'énergie magnétique et la libérer pour fournir de l'énergie à la charge.

Pour augmenter le rendement de la conversion, on prévoit dans le document précité, de réguler le taux de hachage, ou autrement dit les durées successives de conduction et de blocage du transistor de commutation ou encore le rapport cyclique du signal de commande de ce transistor. Cette régulation est mise en oeuvre à l'aide d'une bascule monostable dont on fait varier la constante de temps en fonction de la quantité de lumière qui frappe la cellule. Ce montage peut ainsi être considéré pour la cellule solaire comme une charge variable en fonction de l'éclairement ambiant.

Un montage semblable est connu d'un article de la revue Elektronik, 2087, 39, (1990), 27 avril, No 9, Munich, DE. Dans ce cas, le point de commutation du transistor est réglable par un potentiomètre à commande manuelle qui, selon les conseils de l'auteur de l'article, doit être réglé à une valeur nominale pour un éclairement maximal (en plein soleil).

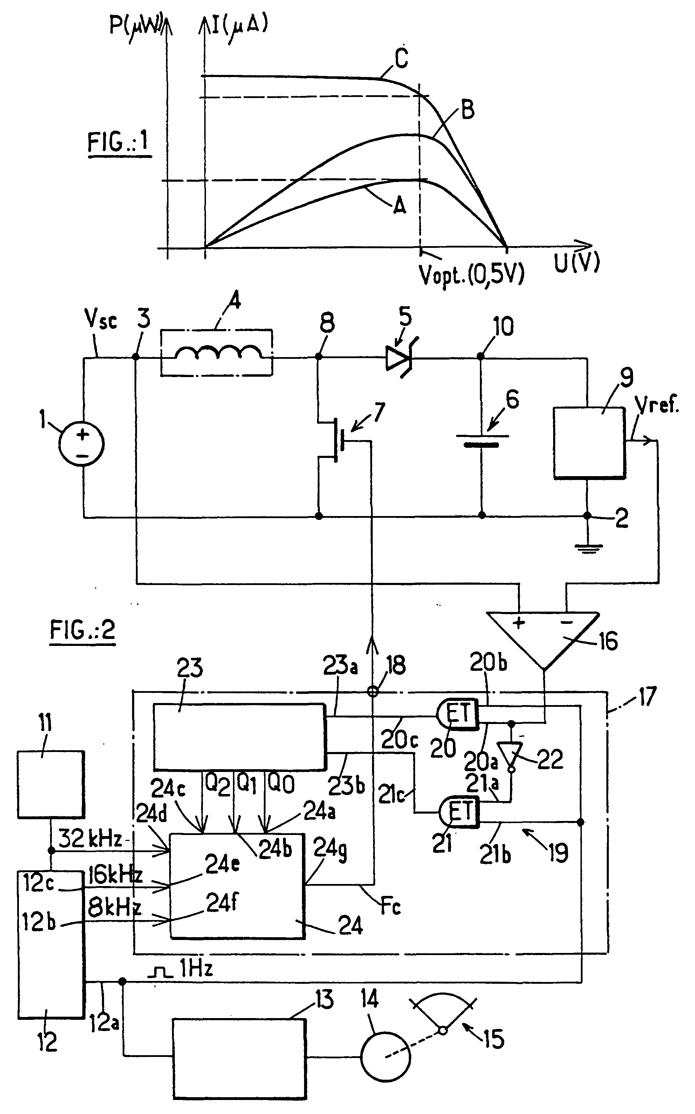

Or, des relevés faits par la Demanderesse de la présente demande de brevet, sur des cellules photovoltaïques de ce type montrent qu'il existe, pour un éclairement donné frappant la cellule, une valeur optimale de puissance délivrée qui est obtenue pour une valeur de la tension au bornes de la cellule relativement bien déterminée. La figure 1 des dessins annexés montre un diagramme dans lequel on a porté en abscisses la tension U en V sur la cellule, en fonction d'une part de la puissance délivrée P en μW (courbes de puissance A et B) et d'autre part en fonction du courant débité I en μA (courbe de courant C). Les deux courbes de puissance ont été relevées respectivement avec un éclairement de 1000 lux (courbe A et C) et un éclairement de 2000 lux (courbe B).

Le diagramme en question décrit, à titre d'exemple, le comportement d'une cellule solaire au $TiO_2$, cas dans lequel la valeur de la tension $V_{opt}$ pour laquelle la puissance délivrée est maximale se situe à environ 0,5 V, cette valeur se décalant légèrement vers la droite sur le diagramme avec l'accroissement de l'éclairement dans une plage relativement restreinte. Il s'est avéré que d'autres types de cellules solaires présentent un diagramme semblable, encore que la valeur nominale de la tension la plus favorable eu égard à la puissance délivrée, puisse varier d'un type de cellule à l'autre.

L'invention a pour but de fournir un élévateur de tension du type général indiqué ci-dessus dans lequel on tire profit de ces constations pour que l'élévateur puisse, avec une très bonne approximation, toujours délivrer la puissance maximale à sa charge et ce quasiment quel que soit l'éclairement auquel la cellule solaire est exposée.

**EP 0 859 454 B1**

L'invention a donc pour objet un élévateur d'une faible tension fournie par une cellule photovoltaïque selon la revendication 1.

D'autres caractéristiques et avantages de l'invention apparaîtront au cours de la description qui va suivre, donnée uniquement à titre d'exemple et faite en se référant aux dessins annexés sur lesquels :

- la figure 1 déjà décrite est un diagramme illustrant le comportement d'une cellule photovoltaïque pouvant être utilisée avec un élévateur de tension selon l'invention;
- la figure 2 est un schéma simplifié d'un élévateur de tension selon l'invention;
- la figure 3 montre un exemple de réalisation du bloc de variation de rapport cyclique utilisé dans l'élévateur de tension de la figure 2; et
- la figure 4 montre quelques formes d'ondes apparaissant dans l'élévateur de tension selon l'invention.

La figure 2 représente un mode de réalisation préféré de l'élévateur de tension selon l'invention utilisé ici à titre d'exemple, dans une pièce d'horlogerie.

Il comporte une cellule photovoltaïque ou cellule solaire 1 formée par exemple d'un seul élément et fournissant une tension $V_{sc}$ de valeur nominale de 0,5 V, par exemple. Il peut s'agir de toute cellule photovoltaïque, à semi-conducteur ou de type photochimique, à $TiO_2$, par exemple. Elle délivre sa tension $V_{sc}$ entre une borne de masse 2 et une borne positive 3. Une self 4 et une diode 5, par exemple une diode de Schottky, sont montées en série entre la borne 3 et le pôle positif d'un accumulateur 6 dont le pôle négatif est raccordé à la borne de masse 2.

L'accumulateur 6 peut être de tout type actuellement disponible sur le marché, comme les accumulateurs chimiques, à ions lithium de préférence, et les capacités électrochimiques, notamment celles que l'on désigne habituellement par le terme de "supercondensateurs" ou "supercap".

Il est à noter toutefois que l'invention peut être appliquée dans le cadre d'autres utilisations dans lesquelles la charge est formée d'un ou de plusieurs autres composants nécessitant une alimentation par la cellule 1.

Le trajet source-drain d'un transistor de commutation 7 est connecté entre le noeud 8 formé entre la self 4 et la diode 5, d'une part et la masse 2 d'autre part.

Un bloc de référence de tension 9 est connecté entre le pôle positif (borne 10) de l'accumulateur 6 et la masse 2. Ce bloc de référence de tension délivre une tension $V_{ref}$ qui est ajustée à la valeur optimale de tension $V_{opt}$ (figure 1) à laquelle on veut réguler la tension de sortie de la cellule sur la borne 3. Dans l'exemple décrit où la cellule 1 est de préférence une cellule électrochimique de type $TiO_2$, cette tension est ajustée à 0,5 V, comme l'illustre le diagramme de la figure 1.

Comme déjà indiqué ci-dessus, l'invention est décrite en application à une pièce d'horlogerie dont les composants principaux habituels sont représentés schématiquement sur la figure 2. Ainsi, cette pièce d'horlogerie comprend un oscillateur à quartz 11 délivrant un signal impulsionnel d'une fréquence de 32 kHz, environ (La valeur exacte est typiquement de 32 768 Hz). Cet oscillateur est connecté à un diviseur de fréquence 12 dont la dernière sortie 12a délivre des impulsions à une fréquence de 1 Hz. Ces impulsions sont appliquées à un circuit de commande 13 d'un moteur pas à pas 14 entraînant des aiguilles 15.

La tension $V_{sc}$ et la tension $V_{ref}$ sont comparées dans un comparateur 16 dont les entrées sont respectivement connectées à la borne 3 et à la sortie du bloc de tension de référence 9. La sortie de ce comparateur 16 est connectée à un circuit générateur 17 du signal de commande du transistor 7, sa sortie 18 étant, à cet effet, reliée à la grille de ce transistor 7.

Le circuit 17 générateur du signal de commande du transistor 7 comprend un bloc d'échantillonnage 19 formé de deux portes ET 20 et 21 et d'un inverseur 22. Plus précisément, la sortie du comparateur 16 est connecté à l'une 20a des entrées de la porte ET 20, et par l'intermédiaire de l'inverseur 22 à l'une 21a des entrées de la porte ET 21. Les autres entrées 20b et 21b de ces portes 20 et 21 sont reliées en commun à la sortie 12a du diviseur de fréquence 12 dont elles reçoivent le signal à 1 Hz. De cette manière, la sortie du comparateur 16 est échantillonnée à un rythme d'un signal de comparaison à la seconde, cette valeur n'étant évidemment choisie qu'à titre d'exemple.

Les sorties 20c et 21c des portes ET 20 et 21 sont respectivement raccordées aux entrées de comptage 23a et de décomptage 23b d'un compteur/décompteur 23. Ce dernier composant comporte trois sorties $Q_0$, $Q_1$ et $Q_2$ reflétant son contenu par un nombre binaire qui peut aller de 0 à 7. Toutefois, dans l'exemple, on n'utilise que les six premières valeurs, c'est-à-dire qu'on bloque la position "7".

Le circuit générateur 17 comprend également une logique combinatoire 24 présentant des premières entrées 24a, 24b et 24c reliées respectivement aux sorties $Q_0$, $Q_1$ et $Q_2$ du compteur/décompteur 23, et des secondes entrées 24d, 24e et 24f connectées respectivement à la sortie de l'oscillateur 11 et à deux sorties supplémentaires 12b et 12c du diviseur de fréquence 12. Ces sorties délivrent respectivement des impulsions à 8 kHz et à 16 kHz, environ. La logique combinatoire 24 présente également une sortie 24g sur laquelle apparaît un signal $F_c$ de commande de la grille du transistor 7.

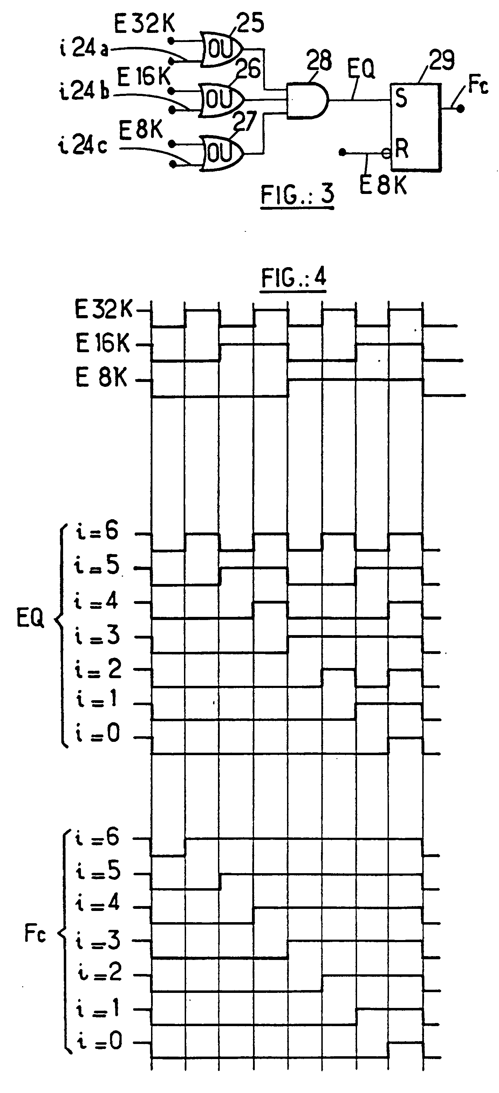

Le schéma de la logique combinatoire 24 apparaît sur la figure 3. On voit que dans l'exemple de réalisation représenté, elle comprend trois portes OU 25, 26 et 27, dont les sorties sont appliquées aux entrées respectives d'une porte ET 28. La sortie de cette dernière est reliée à l'entrée de déclenchement S (set) d'une bascule bistable 29 du type "RNSFF" (reset-not-set flip-flop). Cette bascule présente une entrée R de remise à l'état initial à laquelle est appliquée le signal provenant de la sortie 12b du diviseur de fréquence 12, qui a ici une fréquence de 8 kHz.

L'une des entrées de chacune des portes OU 25, 26 et 27 est reliée respectivement à l'une des entrées 24a, 24b, 24c de la logique combinatoire 24 et reçoivent ainsi des signaux appelés respectivement $i_{24a}$, $i_{24b}$ et $i_{24c}$ représentant ensemble une valeur pouvant évoluer entre 0 et 6 et appelé i. Cette valeur i est matérialisée dans le compteur/décompteur 23.

Les autres entrées des portes OU 25, 26 et 27 sont raccordées respectivement aux entrées 24d, 24e, 24f de cette dernière et reçoivent ainsi des signaux respectifs de fréquence 32, 16 et 8 kHz que l'on désigne par E32k, E16k et E8k.

Il en résulte qu'en appelant la sortie de la porte ET 28 EQ, on peut écrire l'équation logique suivante:

$$EQ = (E8k + i_{24c}) * (E16k + i_{24b}) * (E32k + i_{24a})$$

La bascule 29 transforme la sortie EQ de la porte ET 28 pour engendrer le signal de commande $F_c$ pour la grille du transistor 7, étant entendu que la sortie $F_c$ passe à "1" sur le flanc montant du signal appliqué à l'entrée S de la bascule et à "0" sur le flanc descendant du signal appliqué à l'entrée R.

Les diverses formes d'onde impliquées dans le fonctionnement de la logique combinatoire 24 sont représentées sur la figure 4.

Le résultat en est que le rapport cyclique du signal de commande $F_c$ du transistor 7, et par conséquent du courant circulant vers la charge 6 à partir de la cellule solaire, varie de la façon suivante. Toutes les secondes, le compteur/décompteur 23 est incrémenté d'une unité si $V_{sc} > V_{ref}$, et décrémenté si $V_{sc} < V_{ref}$. Cette variation du contenu du compteur conduit à la sélection d'un rapport cyclique donné en fonction de la combinaison des signaux logiques sur lesquels intervient la logique combinatoire 24.

Le tableau suivant peut ainsi être dressé pour le rapport cyclique :

TABLEAU

| Contenu compteur 23 | Intervalle "tout" (µs) | Intervalle "rien" (µs) | Intervalle "tout" % | Intervalle "rien" % |
|---|---|---|---|---|
| i=6 | 106,2 | 15,3 | 87,5 | 12,5 |
| i=5 | 91,6 | 30,5 | 75,0 | 25,0 |
| i=4 | 76,3 | 45,8 | 62,5 | 37,5 |
| i=3 | 61,0 | 61,0 | 50 | 50 |
| i=2 | 45,8 | 76,3 | 37,5 | 62,5 |
| i=1 | 30,5 | 91,6 | 25,0 | 75,0 |
| i=0 | 15,3 | 106,8 | 12,5 | 87,5 |

Le système se stabilisera lorsque la tension $V_{sc}$ sera proche de la tension $V_{ref}$, c'est à dire qu'à chaque seconde, il cherchera à établir le rapport cyclique le plus favorable pour que la conversion de la tension se fasse dans les meilleures conditions de rendement possibles.

On constate donc que l'invention fournit un élévateur de tension dont le fonctionnement est entièrement numérique. Son emploi est donc particulièrement avantageux dans des circuits numériques comme ceux que l'on retrouve dans les pièces d'horlogerie pilotées par un quartz.

La résolution du rapport cyclique peut être augmentée en ajoutant des étages supplémentaires au compteur-décompteur, et en adaptant la logique combinatoire.

On remarquera encore que les différents blocs 9, 11, 12, 13, 14, 16 et 17 (voir figure 2) sont alimentés par l'accumulateur 6.

Il est à noter que la mise en oeuvre des diverses fonctions décrites ci-dessus peut être obtenue à l'aide d'autres circuits numériques, notamment en ce qui concerne la logique combinatoire, d'autres valeurs de fréquence et d'autres valeurs de la tension de référence $V_{ref}$, cette dernière devant être choisie au mieux pour chaque type de cellule solaire utilisée.

# EP 0 859 454 B1

## Revendications

**1.** Elévateur d'une faible tension fournie par une cellule photovoltaïque (1) et destinée à être appliquée à une charge (6), ledit élévateur de tension comprenant une self (4) montée en série avec une diode de blocage (5) entre ladite cellule (1) et ladite charge (6), le noeud (8) entre ladite self (4) et ladite diode (5) étant raccordée au noeud commun (2) entre ladite cellule (1) et ladite charge (6) par l'intermédiaire d'un composant semi-conducteur commutable (7), ledit élévateur de tension comprenant également des moyens de régulation (11, 12, 16, 17) pour appliquer au dit composant semi-conducteur commutable (7) un signal de commande impulsionnel ($F_C$) dont le rapport cyclique est réglable, **caractérisé en ce que** lesdits moyens de régulation (11, 12, 16, 17) sont agencés pour ajuster ledit rapport cyclique de manière que la tension ($V_{SC}$) aux bornes (2, 3) de ladite cellule (1) soit sensiblement égale à une tension prédéterminée ($V_{opt}$) correspondant sensiblement au point culminant d'une caractéristique puissance-tension (A, B) de ladite cellule (1), lesdits moyens de régulation (11, 12, 16, 17) comprenant un comparateur (16) pour comparer la tension ($V_{SC}$) aux bornes (2, 3) de ladite cellule (1) à une tension de référence ($V_{ref}$) égale à ladite tension prédéterminée ($V_{opt}$), ainsi qu'un circuit générateur (17) dudit signal de commande ($F_C$) capable de faire varier la valeur dudit rapport cyclique suivant que ladite tension ($V_{SC}$) présente aux bornes (2, 3) de ladite cellule (1) est inférieure ou supérieure à ladite tension de référence ($V_{ref}$).

**2.** Elévateur de tension suivant la revendication 1, **caractérisé en ce que** ladite tension prédéterminée ($V_{opt}$) est de 0,5 Volt, environ.

**3.** Elévateur de tension suivant la revendication 1, **caractérisé en ce que** ladite tension prédéterminée ($V_{opt}$) est égale à la tension de deux cellules solaires, environ 1 Volt.

**4.** Elévateur de tension suivant l'une quelconque des revendications 1, 2 ou 3, **caractérisé en ce qu'**il comprend une source de tension de référence (9) délivrant ladite tension de référence ($V_{ref}$) égale à ladite tension prédéterminée ($V_{opt}$), ladite source (9) de la tension de référence ($V_{ref}$) étant connectée aux bornes de ladite charge (6) et engendrant ladite tension de référence ($V_{ref}$) à partir de la tension régnant aux bornes de cette charge.

**5.** Elévateur de tension suivant la revendication 1, **caractérisé en ce que** lesdits moyens de régulation comprennent également des moyens (11, 12, 19) pour échantillonner le signal de sortie dudit comparateur et effectuer ainsi un ajustement périodique dudit rapport cyclique.

**6.** Elévateur de tension suivant la revendication 5, **caractérisé en ce que** lesdits moyens de régulation comprennent un compteur/décompteur (23) qui est connecté aux dits moyens d'échantillonnage et dont le contenu varie en fonction du résultat de la comparaison effectuée par ledit comparateur (16), des moyens générateurs (11, 12) d'une pluralité de signaux impulsionnels de fréquences différentes et une logique combinatoire (24) reliée à la sortie dudit compteur/décompteur (23) et aux dits moyens générateurs (11, 12) et capable d'établir ledit rapport cyclique en fonction du contenu dudit compteur/décompteur 23).

**7.** Pièce d'horlogerie comprenant un élévateur de tension selon l'une quelconque des revendications précédentes.

## Claims

**1.** Voltage booster for a low voltage supplied by a photovoltaic cell (1) arranged to be applied to a load (6), said voltage booster including an inductor coil (4) connected in series with a blocking diode (5) between said cell (1) and said load (6), the node (8) between said inductor coil (4) and said diode (5) being connected to the common node (2) between said cell (1) and said load (6) via a switchable semi-conductor component (7), said voltage booster also including regulating means (11, 12, 16, 17) for applying a pulse control signal ($F_c$) to said switchable semi-conductor component (7) whose duty cycle is adjustable, **characterised in that** said regulating means (11, 12, 16, 17) are arranged to adjust said duty cycle so that the voltage ($V_{sc}$) across the terminals (2, 3) of said cell (1) is substantially equal to a predetermined voltage ($V_{opt}$) substantially corresponding to the maximum value of a voltage-power (A,B) characteristic curve of said cell (1), said regulating means (11, 12, 16, 17) including a comparator (16) for comparing the voltage ($V_{sc}$) across the terminals (2, 3) of said cell (1) to a reference voltage ($V_{ref}$) equal to said predetermined voltage ($V_{opt}$), as well as a circuit (17) for generating said control signal ($F_c$) capable of varying the value of said duty cycle according to whether said voltage ($V_{sc}$) across the terminals (2, 3) of said cell (1) is less or greater than said reference voltage ($V_{ref}$).

**5**

**2.** Voltage booster according to claim 1, **characterised in that** said predetermined voltage ($V_{opt}$) is approximately 0.5 volts.

**3.** Voltage booster according to claim 1, **characterised in that** said predetermined voltage ($V_{opt}$) is equal to the voltage of two solar cells, approximately 1 volt.

**4.** Voltage booster according to any of claims 1, 2 or 3, **characterised in that** it includes a reference voltage source (9) supplying said reference voltage ($V_{ref}$) equal to said predetermined voltage ($V_{opt}$), said source (9) of the reference voltage ($V_{ref}$) being connected to the terminals of said load (6) and generating said reference voltage ($V_{ref}$) from the voltage across the terminals of said load.

**5.** Voltage booster according to claim 1, **characterised in that** said regulating means also include means (11, 12, 19) for sampling the output signal of said comparator and thus to effect periodic adjustment of said duty cycle.

**6.** Voltage booster according to claim 5, **characterised in that** said regulating means include an up/down counter (23) which is connected to said sampling means and whose content varies as a function of the result of the comparison effected by said comparator (16), means (11, 12) for generating a plurality of pulse signals of different frequencies and a combinatorial logic (24) connected to the output of said up/down counter (23) and to said generator means (11, 12) and capable of establishing said duty cycle as a function of the content of said up/down counter (23).

**7.** Timepiece including a voltage booster according to any one of the preceding claims.

**Patentansprüche**

**1.** Einrichtung für die Erhöhung einer von einer photovoltaischen Zelle (1) gelieferten Spannung, die an eine Last (6) angelegt werden soll, wobei die Spannungserhöhungseinrichtung eine Selbstinduktionsspule (4) umfaßt, die zwischen der Zelle (1) und der Last (6) mit einer Sperrdiode (5) in Reihe geschaltet ist, wobei der Knoten (8) zwischen der Selbstinduktionsspule (4) und der Diode mit dem gemeinsamen Knoten (2) zwischen der Zelle (1) und der Last (6) über ein umschaltbares Halbleiterbauelement (7) verbunden ist, wobei die Spannungserhöhungseinrichtung außerdem Einstellmittel (11, 12, 16, 17) umfaßt, die an das umschaltbare Halbleiterbauelement (7) ein Impulssteuersignal ($F_C$) anlegen, dessen Tastgrad einstellbar ist, **dadurch gekennzeichnet, daß** die Einstellmittel (11, 12, 16, 17) so beschaffen sind, daß sie den Tastgrad in der Weise einstellen, daß die Spannung ($V_{SC}$) an den Anschlüssen (2, 3) der Zelle (1) im wesentlichen gleich einer vorgegebenen Spannung ($V_{OPT}$) ist, die im wesentlichen dem Kulminationspunkt einer Leistungs-Spannungs-Kennlinie (A, B) der Zelle (1) entspricht, wobei die Einstellmittel (11, 12, 16, 17) einen Komparator (16), der die Spannung ($V_{SC}$) an den Anschlüssen (2, 3) der Zelle (1) mit einer Referenzspannung ($V_{ref}$) vergleicht, die gleich der vorgegebenen Spannung ($V_{OPT}$) ist, sowie eine Generatorschaltung (17) für das Steuersignal ($F_C$) umfassen, die den Wert des Tastgrades abhängig von der Tatsache, ob die Spannung ($V_{SC}$), die an den Anschlüssen (2, 3) der Zelle (1) anliegt, kleiner oder größer als die Referenzspannung ($V_{ref}$) ist, verändern kann.

**2.** Spannungserhöhungseinrichtung nach Anspruch 1, **dadurch gekennzeichnet, daß** die vorgegebene Spannung ($V_{OPT}$) etwa 0,5 Volt beträgt.

**3.** Spannungserhöhungseinrichtung nach Anspruch 1, **dadurch gekennzeichnet, daß** die vorgegebene Spannung ($V_{OPT}$) gleich der Spannung von zwei Solarzellen, etwa 1 Volt, ist.

**4.** Spannungserhöhungseinrichtung nach einem der Ansprüche 1, 2 oder 3, **dadurch gekennzeichnet, daß** sie eine Referenzspannungsquelle (9) umfaßt, die die Referenzspannung ($V_{ref}$) liefert, die gleich der vorgegebenen Spannung ($V_{OPT}$) ist, wobei die Quelle (9) für die Referenzspannung ($V_{ref}$) an die Anschlüsse der Last (6) angeschlossen ist und die Referenzspannung ($V_{ref}$) anhand der Spannung erzeugt, die an den Anschlüssen dieser Last anliegt.

**5.** Spannungserhöhungseinrichtung nach Anspruch 1, **dadurch gekennzeichnet, daß** die Einstellmittel außerdem Mittel (11, 12, 19) umfassen, die das Ausgangssignal des Komparators abtasten und auf diese Weise eine periodische Einstellung des Tastgrades ausführen.

**6.** Spannungserhöhungseinrichtung nach Anspruch 5, **dadurch gekennzeichnet, daß** die Einstellmittel einen Aufwärts/Abwärtszähler (23), der an die Abtastmittel angeschlossen ist und dessen Inhalt sich in Abhängigkeit vom Ergebnis des vom Komparator (16) ausgeführten Vergleichs ändert, Generatormittel (11, 12) für mehrere Impulssignale mit unterschiedlichen Frequenzen sowie eine kombinatorische Logik (24), die mit dem Ausgang des Aufwärts/Abwärtszählers (23) und mit den Generatormitteln (11, 12) verbunden ist und den Tastgrad in Abhängigkeit vom Inhalt des Aufwärts/Abwärtszählers (23) bilden kann, umfassen.

7. Zeitmeßgerät, das eine Spannungserhöhungseinrichtung nach einem der vorhergehenden Ansprüche umfaßt.

FIG.:1

FIG.:2

FIG.: 3

FIG.: 4